# FASCICULE DE BREVET EUROPEEN

(11) **EP 4 448 145 B1**
(45) Date de publication et mention de la délivrance du brevet: **28.01.2026**
(21) Numéro de dépôt: 22821478.9
(22) Date de dépôt: 22.11.2022
(51) Int. Cl.: B01D 53/26, B01D 53/14, B01D 53/18

(54) **INSTALLATION DE REFROIDISSEMENT D'UN FLUX GAZEUX CONTENANT DU CO2 ET PROCÉDÉ METTANT EN OEUVRE UNE TELLE INSTALLATION**
ANLAGE ZUR KÜHLUNG EINES CO2-HALTIGEN GASSTROMS UND VERFAHREN ZUR VERWENDUNG SOLCH EINER ANLAGE
FACILITY FOR COOLING A GAS FLOW CONTAINING CO2 AND METHOD USING SUCH A FACILITY

(30) Priorité: 17.12.2021 FR 2113862
(43) Date de publication de la demande: 23.10.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: TRAN, Michael, 94503 CHAMPIGNY SUR MARNE (FR); LECLERC, Mathieu, 94503 CHAMPIGNY SUR MARNE (FR); CALORO, Gian Luigi, 94503 CHAMPIGNY SUR MARNE (FR); HARBAL, Achraf, 94503 CHAMPIGNY SUR MARNE (FR)
(74) Mandataire: Air Liquide
(86) Numéro de dépôt international: PCT/EP2022/082837
(87) Numéro de publication internationale: WO 2023/110329

(56) Documents cités:
- US-A- 2 152 251
- US-A1- 2003 045 756
- US-A1- 2014 000 461
- US-A1- 2021 322 921

## Description

La présente invention est relative à une installation de refroidissement d'un flux gazeux, contenant du CO₂, de l'eau et au moins un autre composant et un procédé de refroidissement mettant en œuvre une telle installation. Le refroidissement est effectué par lavage à l'eau et peut également avoir l'effet de purifier le flux gazeux, en enlevant une partie des particules et/ou d'impuretés gazeuses qu'il contient.

Par contenant du CO₂, on entend une teneur en CO₂ supérieure à 10% mole en base sèche.

Afin de réduire les émissions de CO₂ d'origine humaine dans l'atmosphère, des procédés de capture du CO₂ générés dans un procédé donné sont développés. Il s'agit d'extraire le CO₂ d'un gaz généré par le procédé, de le purifier et enfin, en général, de le comprimer afin de le transporter dans une canalisation. Ce traitement nécessite souvent de refroidir et/ou purifier le gaz dans une tour de lavage à l'eau.

Les flux gazeux traités dans les procédés de capture de CO₂ sont le plus souvent disponibles à des températures élevées et à des pressions basses, proches de la pression atmosphérique. Avant tout traitement, il est nécessaire de les refroidir, le plus souvent par contact direct avec de l'eau comme décrit dans EP0503910 ou US2021/322921A1 car cette solution permet de minimiser les pertes de charge. Si un filtre est employé en aval de cette tour de lavage (dans le cas de flux gazeux chargés en particules comme ceux générés par la production de ciment ou de chaux ou par génération d'électricité à partir de charbon par exemple), le flux gazeux doit être surchauffé par rapport à son point de rosée afin d'éviter la formation d'un « gâteau » humide sur les parois du filtre qui le boucherait et pourrait potentiellement bloquer sa régénération dans le cas de filtres dynamiques. La présente invention propose une solution optimisée pour réaliser cette surchauffe.

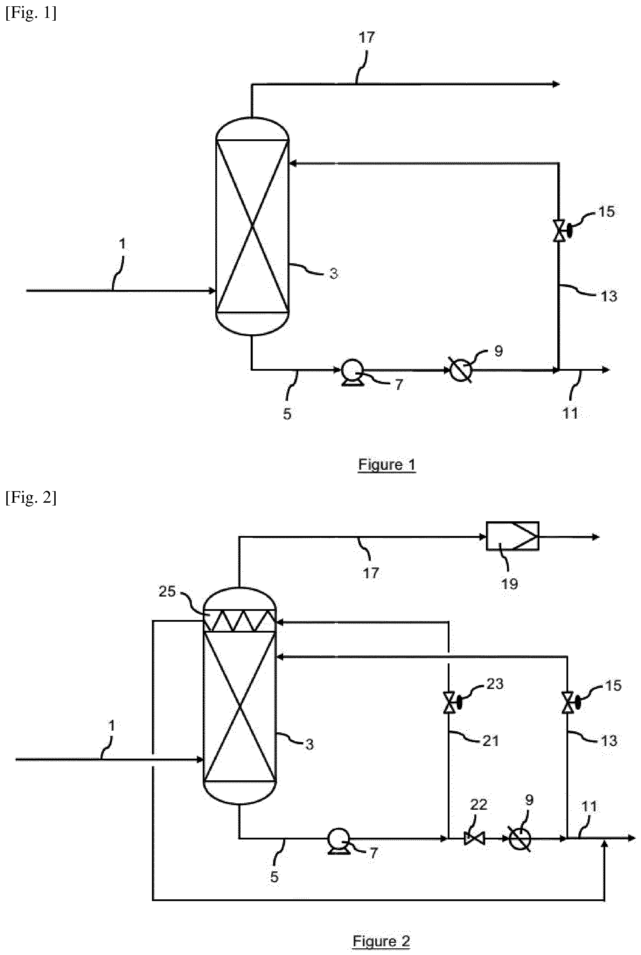

[Fig.1] montre un procédé de lavage à l'eau pour épurer un débit 1 riche en CO₂ par exemple comprenant au moins 10% mol en base sèche ainsi que de l'eau et au moins un autre composant par exemple de l'azote, de l'oxygène, de l'argon, éventuellement des impuretés solides, sous forme particulaire telle de la poussière et éventuellement des composés acides par exemple des NO_{X}, des SO_{X}, des halogénés.

Le débit 1 à une température élevée et à une pression proche de l'atmosphérique est lavé dans une colonne de lavage 3 au moyen d'un débit d'eau 13. L'eau 13 est envoyée en haut de la colonne pour refroidir le gaz et pour abattre des impuretés présentes dans le gaz 1 pour produire un gaz épuré 17 à entre 5 et 70°C, c'est à dire à son point de rosée, et un liquide de cuve 5, principalement de l'eau, qui est pressurisé par une pompe 7, réchauffé et divisé en deux. Une partie 11 est prise pour être épurée et le reste 13 est envoyé après détente dans une vanne 15 en haut de la colonne 3.

La partie épurée pourra être recyclée (non-illustrée) après purification pour alimenter différents circuits du procédé ou pourra être évacuée vers l'extérieur de l'installation.

Il est connu de « Steam : Its Generation and Use » 41ème édition, 2005, Babcock and Wilcox de réchauffer le gaz refroidi dans une tour de lavage pour éviter les dépôts d'acide sulfurique sur les parois des conduites en aval de la tour. L'usage de vapeur d'eau pour chauffer au sein d'un échangeur de chaleur est mentionné.

On pourrait envisager de réchauffer le gaz issu du tour de lavage grâce à des échangeurs de chaleur directement installées dans la partie supérieure de la tour de lavage, après l'échange thermique par lavage avec l'eau. Cette solution permettrait de minimiser les pertes de charge comparativement à une solution impliquant un échangeur de chaleur dédié. De plus, afin de minimiser la taille de ces échangeurs (et donc de minimiser les pertes de charge induites côté flux gazeux), le fluide chaud sélectionné serait de la vapeur d'eau se condensant (pour une plus grande intensité thermique par unité de surface) ou de l'eau très chaude.

Dans d'autres cas, quand la vapeur d'eau ou l'eau très chaude n'est pas disponible, des échangeurs de chaleur électriques pourraient être utilisés afin de réaliser cette surchauffe, pour les mêmes raisons (haute intensité thermique et donc faibles pertes de charge).

Quand la vapeur d'eau ou l'eau très chaude est absente, l'utilisation d'échangeurs de chaleur chauffés électriquement augmente très significativement la consommation électrique de l'unité du fait du débit important à chauffer. Cela peut rendre cette solution prohibitive.

Un objet de l'invention est de réduire le coût de chauffage de l'installation.

Un autre objet de l'invention est de réduire la consommation électrique du procédé.

L'invention permet de réchauffer un flux gazeux à un coût énergétique quasiment nul tout en assurant des pertes de charges très faibles sur le flux gazeux car celui-ci doit être comprimé dans un compresseur pour la réalisation des traitements et séparations supplémentaires. Une perte de charge élevée implique une consommation énergétique plus importante lors de la compression ainsi que l'augmentation de la taille du compresseur et donc de son coût d'investissement.

Selon un objet de 1 invention telle que définie dans la revendication 1, il est prévu une installation de refroidissement d'un flux gazeux, contenant du CO₂, de l'eau et au moins un autre composant comprenant une tour de lavage, une conduite pour envoyer le flux gazeux à une première température en bas de la tour, une conduite pour envoyer de l'eau à une deuxième température, inférieure à la première température, à un premier niveau en haut de la tour de lavage, une pompe, une conduite étant reliée à la cuve de la colonne pour retirer l'eau de cuve et à la pompe pour pressuriser l'eau retirée de la cuve caractérisée en ce qu'elle comprend des moyens pour prélever de l'eau en aval de la pompe, ces moyens étant reliés à la tour pour y envoyer l'eau pressurisée à une troisième température à un échangeur de chaleur indirect se trouvant dans la tour à un deuxième niveau au-dessus du premier niveau, la troisième température étant supérieure à la deuxième température mais inférieure à la première température.

Selon d'autres aspects facultatifs :
- l'installation comprend un réchauffeur, les moyens reliés à la tour pour y envoyer l'eau pressurisée à la troisième température à l'échangeur de chaleur indirect étant reliés au réchauffeur pour y envoyer de l'eau pressurisée par la pompe et pour envoyer l'eau réchauffée dans le réchauffeur à l'échangeur de chaleur indirect.
- la tour comprend des éléments d'échange de masse et de chaleur disposés en dessous du premier niveau et entre les premier et deuxième niveaux mais de préférence pas au-dessus du deuxième niveau.

Selon un autre objet de 1 invention telle que définie dans la revendication 4, il est prévu un procédé de refroidissement d'un flux gazeux, contenant du CO₂, de l'eau et au moins un autre composant dans lequel le flux gazeux est envoyé à une première température en bas d'une tour de lavage, le flux est lavé par de l'eau envoyée à un premier niveau en haut de la tour de lavage à une deuxième température, inférieure à la première température, du gaz épuré au moins partiellement en eau est retiré en haut de la tour à une température inférieure à la première température et de préférence à une température supérieure à sa température de rosée, de l'eau est retirée en cuve de la tour de lavage et pressurisée dans une pompe, de l'eau pressurisée par la pompe est envoyée, sans avoir été refroidie, à une troisième température à un échangeur de chaleur indirect se trouvant dans la tour à un deuxième niveau au-dessus du premier niveau, la troisième température étant supérieure à la deuxième température mais inférieure à la première température, la première partie de l'eau se refroidit dans l'échangeur de chaleur indirect afin d'apporter de la chaleur en haut de la tour de lavage.

Selon d'autres aspects facultatifs :
- au moins une partie de l'eau refroidie dans l'échangeur de chaleur est mélangée avec de l'eau pressurisée et refroidie dans un refroidisseur et est, de préférence, envoyée à une unité de traitement.
- le gaz retiré en haut de la tour est envoyé à un filtre pour enlever des impuretés solides.
- l'installation ne comprend pas de moyens pour chauffer l'eau envoyée à l'échangeur de chaleur en aval de la pressurisation pour atteindre la troisième température.

- l'installation comprend des moyens pour chauffer l'eau envoyée à l'échangeur de chaleur en aval de la pressurisation pour atteindre la troisième température.
- l'installation ne comprend pas de moyens pour refroidir l'eau envoyée à l'échangeur de chaleur en aval de la pressurisation pour atteindre la troisième température.
- l'eau envoyée à l'échangeur de chaleur provient d'un stockage
- une conduite relie l'échangeur de chaleur et la sortie de la pompe
- l'eau envoyée à l'échangeur de chaleur est réchauffée en aval de la pressurisation pour atteindre la troisième température.
- l'eau envoyée à l'échangeur de chaleur est réchauffée par échange de chaleur indirect avec le gaz filtré dans le filtre et ensuite comprimé dans un compresseur.
- l'eau envoyée à l'échangeur de chaleur est réchauffée par échange de chaleur indirect avec le flux gazeux en amont de la tour.
- l'eau envoyée au premier niveau en haut de la tour de lavage à la deuxième température a été préalablement traitée par ajout d'un réactif chimique comme la soude caustique ou le bicarbonate de soude.
- la première température est entre 100 et 200°C.
- la deuxième température est entre 3°C et 37°C.
- la troisième température est entre 40 et 115°C.
- la troisième température est entre 40 et 95°C.
- la deuxième et troisième températures diffèrent d'au moins 30°C, voire d'au moins 60°C.
- la pression du flux gazeux arrivant en base de la tour est entre 0.9 - 2.0 bara.
- l'eau est pressurisée par la pompe à une pression entre 2.0 - 10.0 bara.
- du gaz épuré au moins partiellement en eau est retiré en haut de la tour à une température supérieure à sa température de rosée d'entre 5 et 15°C, de préférence de 10°C.
- une partie de l'eau retirée en cuve de la tour et pressurisée est refroidie pour former l'eau de lavage envoyée au premier niveau
- un refroidisseur sert à refroidir l'eau envoyée au premier niveau jusqu'à la deuxième température.

L'invention consiste principalement à :
- Récupérer au moins une partie de l'eau en cuve du tour de lavage, à environ 50 - 80 °C. Cette eau pourrait être envoyée en tête de colonne pour réaliser le refroidissement au sein du tour de lavage. Or dans le cadre de l'invention, elle est récupérée avant refroidissement (ou sans refroidissement si le refroidisseur n'est pas présent). Cette eau est disponible à une pression très proche de celle du flux gazeux en entrée de tour de lavage.
- Pomper cette eau dans la gamme de pression 0.9 - 2.0 bara jusqu'à une gamme de pression de 2.0 - 10.0 bara
- L'injecter en un échangeur de chaleur en tête de tour de lavage afin de réchauffer d'environ 5 à 15°C et préférentiellement 10°C le flux gazeux en sortie de tour de lavage disponible entre 5 et 70°C.

Il peut s'avérer que la température de cette eau partiellement chauffée soit trop basse et que la quantité à injecter dans l'échangeur de chaleur soit très importante afin d'assurer l'échange thermique souhaité. Cela peut se présenter quand les flux gazeux 1 sont relativement froids (en hiver par exemple) et ne peuvent chauffer l'eau que très partiellement. Dans ce cas, il est nécessaire de multiplier les échangeurs de chaleur ce qui augmente les pertes de charges côté flux gazeux les rendant trop élevées. Afin de réduire le débit d'eau et donc limiter le nombre d'échangeurs de chaleur, il est alors nécessaire d'augmenter la température de l'eau avant injection dans les échangeurs de chaleur. Pour ce faire plusieurs solutions sont envisageables, par ordre d'intérêt :
- chauffage de l'eau partiellement chaude contre les flux gazeux comprimées en aval du filtre. Dans ce cas, l'eau pressurisée remplace partiellement l'eau de refroidissement au sein d'un ou plusieurs refroidisseurs du compresseur. La chaleur est donc gratuite car fatale car issue de l'énergie de compression. Les flux gazeux comprimés pouvant atteindre 50 à 120°C, l'eau pressurisée peut donc atteindre 45 à 115°C. L'eau pressurisée ne permettant pas de refroidir autant que de l'eau de refroidissement, il est important de noter que le refroidissement des flux gazeux comprimées peut être complété par de l'eau de refroidissement. Dans une sous-variante, le refroidissement du flux gazeux comprimé par l'eau pressurisée et de l'eau de refroidissement peut avoir lieu dans un même échangeur. Cela limite donc l'investissement de cette intégration thermique.
- chauffage de l'eau pressurisée contre les flux gazeux en amont du tour de lavage qui sont typiquement entre 100 et 200°C. La chaleur y est aussi gratuite car normalement dissipée dans le tour de lavage. Par contre, cette solution implique des pertes de charge côté flux gazeux.

Au-delà du réchauffement à coût énergétique négligeable, cette solution est aussi très économique car le nombre d'équipements nécessaires est faible: seulement l'échangeur de chaleur en tête de la tour de lavage et éventuellement l'échange thermique avec le flux gazeux comprimé sont à prévoir.

L'invention sera décrite de manière plus détaillée en se référant aux figures.

[Fig.2] représente une installation de refroidissement d'un flux gazeux dans une tour de lavage à 1 eau selon la présente invention.

[Fig.3] représente une variante de la [Fig.2].

[Fig.2] illustre une tour 3 de lavage à l'eau alimentée en cuve par un flux gazeux 1 ayant une teneur en CO2 d'au moins 10% mole en base sèche. Le flux gazeux contient de l'eau et au moins un autre composant par exemple un NOx, un SOx, de l'azote, de l'oxygène, de l'argon, de l'hydrogène, du monoxyde de carbone et des impuretés solides, sous forme particulaire telle que de la poussière. Le flux gazeux arrive dans la tour à la pression proche de l'atmosphérique, par exemple 0.9 - 2.0 bara et à une pre-température entre 100 et 200°C.

La tour contient des moyens de favoriser l'échange de chaleur et de masse, par exemple des garnissages structurés. Le flux gazeux monte dans la tour et est refroidi par le contact direct avec l'eau. L'eau 5 en cuve de la tour comprend une grande partie de l'eau contenue dans le flux gazeux 1 et peut contenir des impuretés solides et/ou des composants du flux gazeux absorbés par l'eau. L'eau 5 se trouve à une température entre 40 et 95°C, de préférence entre 50 - 80 °C.

L'eau 5 est pressurisée par une pompe 7 jusqu'à une pression entre 2.0 - 10.0 bara et ensuite divisée en deux parties sans avoir été chauffée autrement que par le pompage et sans avoir été refroidie. Une première partie 21 est envoyée à travers une vanne de régulation 23 dans un échangeur de chaleur indirect disposé dans la tour de lavage, à un deuxième niveau, de préférence au-dessus des moyens de favoriser l'échange de masse et de chaleur. L'eau dans l'échangeur 25 est à une troisième température entre 40 et 95°C en arrivant dans l'échangeur 25 où elle se refroidit en réchauffant le flux gazeux montant dans la tour 3 et le flux réchauffé 17 sort de la tour et est envoyé à un filtre 19 pour enlever les impuretés solides qu'il contient, ces impuretés ayant pu exister dans le flux 1 ou ayant été récupérées ou produites dans la tour 3.

La température de l'eau 21 permet de chauffer le flux gazeux montant dans la colonne de sorte que le flux gazeux 17 sortant de la tour est augmentée d'entre 5 et 15°C et préférentiellement de 10°C, le flux gazeux 17 en sortie de tour de lavage 3 étant disponible entre 5 et 70°C dans le cas précédent où le flux gazeux n'est pas chauffé en haut de la tour. Ainsi le flux gazeux 17 se trouve à entre 5 et 15°C, de préférence à 10°C, au-dessus de son point de rosée.

La deuxième partie de l'eau pompée passe dans une vanne de régulation 22 et est refroidi par un refroidisseur 9 avant d'être divisée pour former un débit 13 et un débit 11. Le débit 13 est envoyé par une vanne de régulation 15 à la tour de lavage à un premier niveau en dessous du deuxième niveau qui est le point d'arrivée de la première partie 21.

L'eau 13 envoyée au premier niveau en haut de la tour de lavage 3 à la deuxième température a été préalablement traitée par ajout d'un réactif chimique comme la soude caustique ou le bicarbonate de soude. Ceci augmenter le pH de l'eau et assurer l'abattement des SOx, en particulier quand cette eau provient de la cuve de la tour, comme illustrée dans l'exemple.

La deuxième et troisième températures diffèrent de préférence d'au moins 30°C, voire d'au moins 60°C.

L'eau 21 refroidie dans l'échangeur de chaleur 25 est mélangée avec le débit 11. Comme elle est toujours à une température trop élevée, l'eau 21 refroidie dans l'échangeur 25 n'est pas utilisée pour le lavage.

Des éléments d'échange de masse et de chaleur sont disposés en dessous du premier niveau et entre les premier et deuxième niveaux mais de préférence pas au-dessus du deuxième niveau.

L'échangeur de chaleur indirect 25 est de préférence de type tubulaire en épingle (en anglais « hairpin heat exchanger »), l'eau circulant dans le ou les tubes et échangeant de la chaleur avec le gaz en contact avec la ou les parois externes du ou des tubes.

Dans cet exemple l'eau utilisée pour le lavage provient de la cuve de la tour. Or il est possible d'utiliser comme eau de lavage de l'eau provenant d'une autre source, telle qu'un stockage.

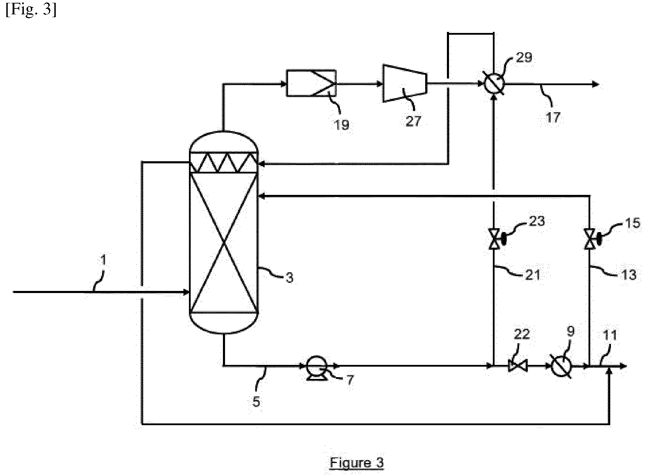

Dans la variante de la [Fig.3], la première partie de l'eau 21 n'est pas envoyée directement à la tour de lavage 3 mais récupère de la chaleur par échange de chaleur indirect dans un échangeur de chaleur 29 en aval d'un compresseur 27. Le compresseur 27 sert à comprimer le flux gazeux 17 sortant du filtre 19 et la chaleur de compression générée sert à réchauffer la première partie de l'eau 21 en amont de son envoi vers l'échangeur de chaleur 25. Le flux gazeux sortant du compresseur 27 étant à entre 50 et 120°C, l'eau 21 chauffée par ce flux gazeux comprimé peut donc atteindre entre 45 et 115°C. Ainsi le flux gazeux 17 se trouve à entre 5 et 15°C, de préférence à 10°C, au-dessus de son point de rosée.

Le gaz comprimé 17 est de préférence envoyé à un autre refroidisseur si l'échange de chaleur avec l'eau 21 n'est pas suffisant pour le refroidir.

Comme indiqué, cette solution est particulièrement utile quand le flux gazeux est à une température relativement basse, par exemple en hiver.

## Revendications

1. Installation de refroidissement d'un flux gazeux (1), contenant du CO₂, de l'eau et au moins un autre composant comprenant une tour de lavage (3), une conduite pour envoyer le flux gazeux à une première température en bas de la tour, une conduite pour envoyer de l'eau (13) à une deuxième température, inférieure à la première température, à un premier niveau en haut de la tour de lavage, une pompe (7), une conduite étant reliée à la cuve de la colonne pour retirer l'eau (5) de cuve et à la pompe pour pressuriser l'eau retirée de la cuve **caractérisée en ce qu'**elle comprend des moyens pour prélever de l'eau (21) en aval de la pompe, ces moyens étant reliés à la tour pour y envoyer l'eau pressurisée à une troisième température à un échangeur de chaleur indirect (25) se trouvant dans la tour à un deuxième niveau au-dessus du premier niveau, la troisième température étant supérieure à la deuxième température mais inférieure à la première température.

2. Installation selon la revendication 1 comprenant un réchauffeur (29), les moyens reliés à la tour pour y envoyer l'eau (21) pressurisée à la troisième température à l'échangeur de chaleur indirect (25) étant reliés au réchauffeur pour y envoyer de l'eau pressurisée par la pompe et pour envoyer l'eau réchauffée dans le réchauffeur à l'échangeur de chaleur indirect.

3. Installation selon la revendication 1 ou 2 dans laquelle la tour (3) comprend des éléments d'échange de masse et de chaleur disposés en dessous du premier niveau et entre les premier et deuxième niveaux mais de préférence pas au-dessus du deuxième niveau.

4. Procédé de refroidissement d'un flux gazeux (1), contenant du CO₂, de l'eau et au moins un autre composant dans lequel le flux gazeux est envoyé à une première température en bas d'une tour de lavage (3), le flux est lavé par de l'eau (13) envoyée à un premier niveau en haut de la tour de lavage à une deuxième température, inférieure à la première température, du gaz épuré (17) au moins partiellement en eau est retiré en haut de la tour à une température inférieure à la première température et de préférence à une température supérieure à sa température de rosée, de l'eau (5) est retirée en cuve de la tour de lavage et pressurisée dans une pompe (7), de l'eau (21) pressurisée par la pompe est envoyée, sans avoir été refroidie, à une troisième température à un échangeur de chaleur indirect (25) se trouvant dans la tour à un deuxième niveau au-dessus du premier niveau, la troisième température étant supérieure à la deuxième température mais inférieure à la première température, la première partie de l'eau se refroidit dans l'échangeur de chaleur indirect afin d'apporter de la chaleur en haut de la tour de lavage.

5. Procédé selon la revendication 4 dans lequel au moins une partie de l'eau (21) refroidie dans l'échangeur de chaleur (25) est mélangée avec de l'eau pressurisée et refroidie dans un refroidisseur (9) et est, de préférence, envoyée à une unité de traitement.

6. Procédé selon la revendication 4 ou 5 dans lequel le gaz (17) retiré en haut de la tour est envoyé à un filtre (19) pour enlever des impuretés solides.

7. Procédé selon la revendication 4, 5 ou 6 dans lequel l'eau (21) envoyée à l'échangeur de chaleur (25) n'est pas réchauffée en aval de la pressurisation pour atteindre la troisième température.

8. Procédé selon la revendication 4, 5 ou 6 dans lequel l'eau (21) envoyée à l'échangeur de chaleur (25) est réchauffée en aval de la pressurisation pour atteindre la troisième température.

9. Procédé selon la revendication 6 et 8 dans lequel l'eau (21) envoyée à l'échangeur de chaleur (25) est réchauffée par échange de chaleur indirect avec le gaz filtré dans le filtre (19) et ensuite comprimé dans un compresseur (27).

10. Procédé selon la revendication 8 dans lequel l'eau (21) envoyée à l'échangeur de chaleur (25) est réchauffée par échange de chaleur indirect avec le flux gazeux (1) en amont de la tour (3).

## Patentansprüche

1. Eine Kühlanlage für einen Gasstrom (1), der CO2, Wasser und mindestens eine weitere Komponente enthält, umfassend einen Waschturm (3), eine Leitung zum Zuführen des Gasstroms bei einer ersten Temperatur unten in den Turm, eine Leitung zum Zuführen von Wasser (13) bei einer zweiten Temperatur, die niedriger als die erste Temperatur ist, zu einer ersten Ebene oben im Waschturm, eine Pumpe (7), eine Leitung, die mit dem Sumpf der Kolonne verbunden ist, um Wasser (5) aus dem Sumpf zu entnehmen, und mit der Pumpe, um das entnommene Sumpfwasser unter Druck zu setzen, **dadurch gekennzeichnet, dass** sie Mittel zur Entnahme von Wasser (21) stromabwärts der Pumpe umfasst, wobei diese Mittel mit dem Turm verbunden sind, um das unter Druck stehende Wasser bei einer dritten Temperatur zu einem indirekten Wärmetauscher (25) zu leiten, der sich im Turm auf einer zweiten Ebene über der ersten Ebene befindet, wobei die dritte Temperatur höher als die zweite Temperatur, aber niedriger als die erste Temperatur ist.

2. Die Anlage nach Anspruch 1, umfassend einen Erhitzer (29), wobei die mit dem Turm verbundenen Mittel zum Zuführen des unter Druck stehenden Wassers (21) bei der dritten Temperatur zum indirekten Wärmetauscher (25) mit dem Erhitzer verbunden sind, um ihm unter Druck stehendes Wasser von der Pumpe zuzuführen und das erhitzte Wasser vom Erhitzer zum indirekten Wärmetauscher zu leiten.

3. Die Anlage nach Anspruch 1 oder 2, wobei der Turm (3) Stoff- und Wärmeaustauschelemente umfasst, die unterhalb der ersten Ebene und zwischen der ersten und zweiten Ebene, aber vorzugsweise nicht oberhalb der zweiten Ebene angeordnet sind.

4. Ein Kühlverfahren für einen Gasstrom (1), der CO2, Wasser und mindestens eine weitere Komponente enthält, bei dem der Gasstrom bei einer ersten Temperatur unten in einen Waschturm (3) geleitet wird, der Strom mit Wasser (13) gewaschen wird, das auf einer ersten Ebene oben im Waschturm bei einer zweiten Temperatur, die niedriger als die erste Temperatur ist, zugeführt wird, das gereinigte Gas (17), das sich zumindest teilweise in Wasser befindet, oben aus dem Turm bei einer Temperatur entnommen wird, die niedriger als die erste Temperatur ist und vorzugsweise bei einer Temperatur, die höher als sein Taupunkt ist, Wasser (5) aus dem Sumpf des Waschturms entnommen und in einer Pumpe (7) unter Druck gesetzt wird, unter Druck stehendes Wasser (21) von der Pumpe, ohne gekühlt worden zu sein, bei einer dritten Temperatur zu einem indirekten Wärmetauscher (25) geleitet wird, der sich im Turm auf einer zweiten Ebene über der ersten Ebene befindet, wobei die dritte Temperatur höher als die zweite Temperatur, aber niedriger als die erste Temperatur ist, der erste Teil des Wassers im indirekten Wärmetauscher abkühlt, um Wärme an den oberen Teil des Waschturms zu liefern.

5. Das Verfahren nach Anspruch 4, bei dem mindestens ein Teil des im Wärmetauscher (25) gekühlten Wassers (21) mit unter Druck stehendem und in einem Kühler (9) gekühltem Wasser gemischt und vorzugsweise einer Behandlungseinheit zugeführt wird.

6. Das Verfahren nach Anspruch 4 oder 5, bei dem das oben aus dem Turm entnommene Gas (17) einem Filter (19) zugeführt wird, um feste Verunreinigungen zu entfernen.

7. Das Verfahren nach Anspruch 4, 5 oder 6, bei dem das dem Wärmetauscher (25) zugeführte Wasser (21) stromabwärts der Druckbeaufschlagung nicht erhitzt wird, um die dritte Temperatur zu erreichen.

8. Das Verfahren nach Anspruch 4, 5 oder 6, bei dem das dem Wärmetauscher (25) zugeführte Wasser (21) stromabwärts der Druckbeaufschlagung erhitzt wird, um die dritte Temperatur zu erreichen.

9. Das Verfahren nach Anspruch 6 und 8, bei dem das dem Wärmetauscher (25) zugeführte Wasser (21) durch indirekten Wärmeaustausch mit dem im Filter (19) gefilterten Gas erhitzt und anschließend in einem Kompressor (27) verdichtet wird.

10. Das Verfahren nach Anspruch 8, bei dem das dem Wärmetauscher (25) zugeführte Wasser (21) durch indirekten Wärmeaustausch mit dem Gasstrom (1) stromaufwärts des Turms (3) erhitzt wird.

## Claims

1. A cooling installation for a gas stream (1), containing CO2, water and at least one other component, comprising a scrubbing tower (3), a conduit for sending the gas stream at a first temperature to the bottom of the tower, a conduit for sending water (13) at a second temperature, lower than the first temperature, to a first level at the top of the scrubbing tower, a pump (7), a conduit being connected to the sump of the column to withdraw water (5) from the sump and to the pump to pressurize the withdrawn sump water, **characterized in that** it comprises means for taking off water (21) downstream of the pump, said means being connected to the tower to send the pressurized water at a third temperature to an indirect heat exchanger (25) located in the tower at a second level above the first level, the third temperature being higher than the second temperature but lower than the first temperature.

2. The installation according to claim 1, comprising a heater (29), the means connected to the tower for sending the pressurized water (21) at the third temperature to the indirect heat exchanger (25) being connected to the heater to send pressurized water from the pump thereto and to send the heated water from the heater to the indirect heat exchanger.

3. The installation according to claim 1 or 2, wherein the tower (3) comprises mass and heat exchange elements arranged below the first level and between the first and second levels but preferably not above the second level.

4. A cooling method for a gas stream (1), containing CO2, water and at least one other component, wherein the gas stream is sent at a first temperature to the bottom of a scrubbing tower (3), the stream is scrubbed with water (13) sent to a first level at the top of the scrubbing tower at a second temperature, lower than the first temperature, the purified gas (17) which is at least partially in water is withdrawn from the top of the tower at a temperature lower than the first temperature and preferably at a temperature higher than its dew point, water (5) is withdrawn from the sump of the scrubbing tower and pressurized in a pump (7), pressurized water (21) from the pump is sent, without having been cooled, at a third temperature to an indirect heat exchanger (25) located in the tower at a second level above the first level, the third temperature being higher than the second temperature but lower than the first temperature, the first portion of the water cools in the indirect heat exchanger in order to provide heat to the top of the scrubbing tower.

5. The method according to claim 4, wherein at least a portion of the water (21) cooled in the heat exchanger (25) is mixed with pressurized and cooled water in a cooler (9) and is, preferably, sent to a treatment unit.

6. The method according to claim 4 or 5, wherein the gas (17) withdrawn from the top of the tower is sent to a filter (19) to remove solid impurities.

7. The method according to claim 4, 5 or 6, wherein the water (21) sent to the heat exchanger (25) is not heated downstream of the pressurization to reach the third temperature.

8. The method according to claim 4, 5 or 6, wherein the water (21) sent to the heat exchanger (25) is heated downstream of the pressurization to reach the third temperature.

9. The method according to claim 6 and 8, wherein the water (21) sent to the heat exchanger (25) is heated by indirect heat exchange with the gas filtered in the filter (19) and then compressed in a compressor (27).

10. The method according to claim 8, wherein the water (21) sent to the heat exchanger (25) is heated by indirect heat exchange with the gas stream (1) upstream of the tower (3).
